# EUROPÄISCHE PATENTSCHRIFT

(11) **EP 3 204 644 B1**
(45) Veröffentlichungstag und Bekanntmachung des Hinweises auf die Patenterteilung: **14.07.2021**
(21) Anmeldenummer: 15774918.5
(22) Anmeldetag: 05.10.2015
(51) Int. Cl.: F03G 3/08, F04B 37/08, F16F 15/31, F16C 32/04, B01D 53/04, H01F 6/04

(54) **VORRICHTUNG ZUM VERBESSERN DES VAKUUMS IM GEHÄUSE EINER MASCHINE**
DEVICE FOR IMPROVING THE VACUUM IN THE HOUSING OF A MACHINE
DISPOSITIF SERVANT À AMÉLIORER LE VIDE DANS LE CARTER D'UNE MACHINE

(30) Priorität: 10.10.2014 DE 102014015172
(43) Veröffentlichungstag der Anmeldung: 16.08.2017
(73) Patentinhaber: Messer Industriegase GmbH, 65812 Bad Soden (DE); Messer Group GmbH, 65812 Bad Soden (DE)
(72) Erfinder: KUTZ, Thomas, 41379 Brüggen-Born (DE); HERZOG, Friedhelm, 47803 Krefeld (DE)
(74) Vertreter: Münzel, Joachim R.
(86) Internationale Anmeldenummer: PCT/EP2015/072895
(87) Internationale Veröffentlichungsnummer: WO 2016/055398

(56) Entgegenhaltungen:
- DE-C1- 19 709 674
- JP-A- 2008 086 095
- US-A- 3 310 227
- US-A- 4 766 741
- US-A- 5 462 402
- None

## Beschreibung

Die Erfindung betrifft eine Maschine, umfassend einen an wenigstens einem supraleitenden Lager berührungslos gelagerten Rotor, der in einem Vakuumbehälter angeordnet ist, wobei das supraleitende Lager zur Aufrechterhaltung seines Betriebszustandes mit einer von einem kryogenen Medium gekühlten Kältequelle thermisch verbunden ist, und bei der Mittel zum Verbessern des im Vakuumbehälter vorliegenden Vakuums vorgesehen sind.

Für die Erzeugung starker Magnetfelder werden u.a. supraleitende Materialien eingesetzt, deren Charakteristikum es ist, bei Abkühlung auf Temperaturen unterhalb ihrer Sprungtemperatur ihren elektrischen Widerstand zu verlieren. Durch die Entwicklung von Hochtemperatur-Supraleitern, die bei Temperaturen in der Nähe des Flüssigstickstoff-Siedepunktes eingesetzt werden, kann man heute Stromkabel, Energiespeicher, Apparate und Maschinen herstellen, bei denen die Kosten für die erforderliche Kühlung vergleichsweise gering sind. Um die supraleitenden Komponenten auf eine Temperatur unterhalb der Sprungtemperatur zu bringen, werden sie mittels einer Kompressions-Kältemaschine oder durch Kontakt mit einem tiefkalt verflüssigten Gas, insbesondere Flüssigstickstoff, gekühlt. Auch nach Unterschreiten der Sprungtemperatur ist aufgrund eines unvermeidlichen Wärmeeintrags durch Konvention, Strahlung oder Wärmeleitung eine fortlaufende Kühlung erforderlich, wobei ein zur Kühlung eingesetzten verflüssigtes Gas zumindest teilweise verdampft.

Bei einigen Maschinen mit schnell rotierenden Maschinenelementen, beispielsweise bei Schwungmassen-Energiespeichern, wie sie beispielsweise aus der JP 2008 086 095 A bekannt sind, werden supraleitende Werkstoffe insbesondere für die Erzeugung von Magnetfeldern zur Herstellung einer berührungslosen Lagerung des Rotors eingesetzt. Im Folgenden sollen derartige Lager, in deren Betriebszustand ein Rotor mittels Magnetfeldern berührungslos gelagert wird, wobei die Magnetfelder in Spulen erzeugt werden, die aus einem supraleitenden Material bestehen, als "supraleitendes Lager" bezeichnet werden. Sie zeichnen sich dadurch aus, dass bei Drehung des Rotors keine mechanischen Reibungsverluste am Lager auftreten; sie sind somit insbesondere geeignet, Energie in Form von Rotationsenergie potenziell über einen langen Zeitraum zu speichern. Dennoch auftretende Verluste sind in erster Linie auf Reibung mit der umgebenden Atmosphäre zurückzuführen, weshalb sich die rotierenden Massen zweckmäßigerweise in einem Vakuumbehälter befinden, in dem typischerweise ein Druck von 0,1 Pa (10⁻³ mbar) und darunter herrscht. In der Regel wird dieses Vakuum durch Verwendung einer Vakuumpumpe gängigen Typs erzeugt. Die Vakuumpumpe kann entweder für den gesamten Betriebszeitraum angeschlossen bleiben, oder sie wird nach Erzeugung des Vakuums und Verschließen des Vakuumbehälters vom System getrennt. Lässt man eine Vakuumpumpe während der Zeit des Betriebes an das System angeschlossen, so führt dies zu erheblich höheren Betriebskosten, zudem können sich von der Pumpe erzeugte Schwingungen auf das System übertragen und dessen Funktion beeinträchtigen. Wird die Vakuumpumpe nach Erzeugung des Vakuums vom System getrennt, ist dafür Sorge zu tragen, dass der Wiederanstieg des Drucks im Innern des Vakuumbehälters durch Ausgasungen oder durch Eindringen von Umgebungsluft in den Vakuumbehälter möglichst klein gehalten wird.

Um dies zu bewerkstelligen wird in der WO 2013/149625 A1 vorgeschlagen, im Innern des Vakuumbehälters einer Schwungmasse eine Kaltfläche vorzusehen. Dabei wird eine Fläche im Gehäuse angeordnet und auf Temperaturen abgekühlt, die unterhalb des Taupunkts bestimmter Bestandteile der umgebenden Atmosphäre liegen. Diese Bestandteile vollziehen einen Phasenübergang und frieren auf der gekühlten Oberfläche fest. Dieser Effekt unterstützt die Druckabnahme des Restgases, die bereits durch das alleinige Abkühlen des Gases entsteht. Durch die darüber hinaus gehende Immobilisierung der als Feststoff- oder Flüssigkeitsteilchen an der kalten Oberfläche anhaftenden Gasanteile sinkt der Druck im Gesamtsystem weiter.

Apparaturen, bei denen ein Druck in einer Vakuumkammer durch thermischen Kontakt mit einer mittels eines kryogenen Mediums gekühlten Fläche auf einen möglichst niedrigen Wert gehalten wird, sind auch aus der US 3 310 227 A1 oder der US 4 766 741 A1 bekannt.

Eine Reduzierung des Drucks im Vakuumbehälter ist jedoch bei diesem Gegenstand nur so lange möglich, als in der verdünnten Atmosphäre des Vakuumbehälters und bei den auf der Kühlfläche herrschenden Temperaturen noch Phasenübergänge stattfinden können. Sind alle kondensierbaren Bestandteile eingefroren, ist bei einem im Wesentlichen aus Luftgasen bestehenden Restgas auf diesem Wege keine weitere Reduzierung des Drucks mehr möglich.

Aufgabe der vorliegenden Erfindung ist somit, eine Anordnung zur Verbesserung des Vakuums in Maschinen, insbesondere in Schwungrad-Energiespeichern, zu schaffen, die auch bei sehr niedrigen Drücken effizient arbeitet und ohne großen apparativen Aufwand zu realisieren ist.

Die Aufgabe der Erfindung wird gelöst durch eine Vorrichtung mit den Merkmalen des Patentanspruchs 1. Vorteilhafte Ausgestaltungen sind in den Unteransprüchen angegeben.

Eine Vorrichtung der eingangs genannten Art und Zweckbestimmung ist erfindungsgemäß also dadurch gekennzeichnet, dass als Mittel zum Verbessern des Vakuums ein mit einer Kühleinrichtung thermisch verbundener Adsorber vorgesehen ist.

Beim Adsorber handelt es sich um einen gängigen Adsorber, wie er beispielsweise auch zu Herstellung und Aufrechterhaltung eines Isolationsvakuums in hochvakuumisolierten Behältern verwendet wird. Im Unterschied zu einer Kühlfalle vermag der Adsorber auch bei tiefen Betriebsdrücken noch Gasmoleküle aufzunehmen und dauerhaft an sich zu binden. Er ermöglich dadurch Betriebsdrücke, die weit unter den von üblichen Vakuumpumpen erreichbaren Drücken liegen und in einem Bereich von 10⁻⁴ bis 10⁻⁵ bar und darunter liegen. Eine bestimmte Arbeitstemperatur ist für den Adsorber dabei nicht erforderlich; jedoch läuft der Adsorptionsprozess umso besser ab, je niedriger die Temperatur ist. Daher wird der Adsorber mittels der Kühleinrichtung gekühlt. Bei der Kühleinrichtung kann es sich um eine mit der Kühlung für das supraleitende Lager wirkverbundenen Einrichtung oder aber um eine separate Kühleinrichtung handeln. Bevorzugt wird der Adsorber dabei auf eine Temperatur von unter 0°C, bevorzugt von unter minus 100°C gekühlt.

Die Erfindung sieht vor, dass die Kühleinrichtung einen mit dem Adsorber thermisch verbundenen Wärmetauscher umfasst, der mit einer Abgasleitung der Kühlquelle strömungsverbunden ist. Als Kühlmedium zur Kühlung des Adsorbers wird somit verdampftes Kühlmedium genutzt, das zuvor zur Kühlung des supraleitenden Lagers (oder der supraleitenden Lager, falls mehrere zum Einsatz kommen) eingesetzt worden ist. Zwar erfolgt nach Erreichen der Betriebstemperatur des supraleitenden Lagers (die Betriebstemperatur entspricht einer Temperatur unterhalb der Sprungtemperatur des eingesetzten supraleitenden Materials) kein Wärmeeintrag durch elektrischen Widerstand mehr, jedoch ist aufgrund von Wärmestrahlung aus der Umgebung und durch Wärmeleitung über die mit dem supraleitenden Lager oder den supraleitenden Lagern verbundenen Komponenten der Apparatur ein gewisser Wärmeeintrag unvermeidlich. Dieser Wärmeeintrag führt zum Verdampfen mindestens eines kleinen Teils des zur Kühlung des supraleitenden Lagers eingesetzten kryogenen Kühlmediums. Dieses abdampfende Kühlmedium besitzt noch eine erheblichen sensiblen Kälteinhalt, der in dieser Ausführungsform der Erfindung zum Kühlen des Adsorptionsmaterials eingesetzt wird.

Der Adsorber ist beispielsweise an einem beliebigen Ort innerhalb des Vakuumbehälters oder aber in einer mit der Vakuumkammer strömungsverbundenen Vakuumkammer angeordnet. Wird der Adsorber über einen Wärmetauscher mittels eines kryogenen Mediums gekühlt, ist die Vakuumkammer bevorzugt mit einer thermischen Isolierung versehen. Im Rahmen der Erfindung ist es im Übrigen auch vorstellbar, dass zwischen einer Vakuumkammer, die den Adsorber enthält und dem Vakuumbehälter, in dem der Rotor der Maschine angeordnet ist, eine lediglich temporäre Verbindung besteht. Die Vakuumkammer kann in diesem Fall also vom Vakuumbehälter unter Beibehaltung des Vakuums im Vakuumbehälter strömungstechnisch getrennt und der Adsorber anschließend zur Desorption entnommen und durch frisches Adsorbermaterial ersetzt werden. Auf diese Weise ist es möglich, den Adsorber während des laufenden Betriebs der Maschine zu wechseln bzw. zu regenerieren. Eine spezielle Ausgestaltung sieht dabei vor, mehrere mit dem Vakuumbehälter verbindbare Vakuumkammern vorzusehen, in denen jeweils ein Adsorber angeordnet ist, und die abwechselnd mit dem Vakuumbehälter verbunden und wieder von diesem getrennt werden können.

Die Strömungsverbindung zwischen der Vakuumkammer und dem Vakuumbehälter ist vorteilhaft verschließbar ausgebildet. Zum Verschließen und Öffnen der Strömungsverbindung kommt dabei bevorzugt ein Ventil oder eine Schleuse zum Einsatz, die es beispielsweise ermöglicht, die Vakuumkammer zwecks Entnahme oder Regeneration des Adsorbers zu öffnen, während gleichzeitig das Vakuum im Vakuumbehälter aufrecht erhalten bleibt.

Als Kühlmedium zum Kühlen der Kältequelle und/oder des Adsorbers kommt erfindungsgemäß ein kryogenes Kühlmedium zum Einsatz, also ein tiefkaltes, bevorzugt verflüssigtes Gas. Beim Einsatz von hochtemperatursupraleitenden Materialien, wie sie beispielsweise bei den in der WO 2012031790 A1 beschriebenen Spulentypen zum Einsatz kommen, ist der Einsatz von verflüssigtem Stickstoff oder verflüssigtem Argon zur Aufrechterhaltung der Betriebsfähigkeit der supraleitenden Lager bevorzugt. Zur Erreichung noch tieferer Temperaturen ist es im Rahmen der Erfindung möglich, die verflüssigten Gase dabei zu unterkühlen, also auf eine Temperatur unterhalb ihrer Siedetemperatur zu bringen. Bei Spulen aus klassischen Supraleitern, wie beispielsweise NbTi, dürfte jedoch in der Regel die Verwendung von flüssigem Helium erforderlich ein.

Bevorzugt handelt es sich bei der erfindungsgemäßen Vorrichtung um eine Maschine, bei der der Rotor eine Welle und eine daran montierte Schwungmasse aufweist, wie sie insbesondere bei Schwungmassen-Energiespeichern zum Einsatz kommen.

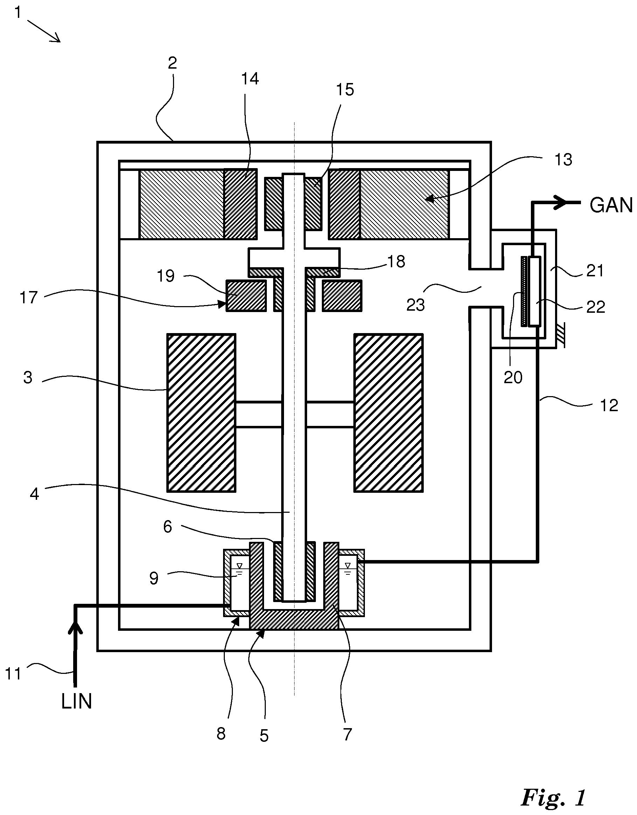

Anhand der Zeichnung wird im Folgenden ein Ausführungsbeispiel der Erfindung näher erläutert. Die einzige Zeichnung (Fig. 1) zeigt einen erfindungsgemäßen Schwungrad-Energiespeicher.

Die in der Zeichnung gezeigte Maschine, im Ausführungsbeispiel ein Schwungrad-Energiespeicher 1, umfasst eine in einem Vakuumbehälter 2 aufgenommene Schwungmasse 3, die an einer vertikal angeordneten Welle 4 befestigt ist. Die Welle 4 ist an ihrem unteren Ende in einem supraleitenden Lager 5 berührungslos gelagert und zu diesem Zweck mit einer magnetischen Rotoreinheit 6 ausgerüstet. Das supraleitende Lager 5 umfasst einen Stator 7 in denen hier nicht gezeigte supraleitende Spulen zur Erzeugung eines zur berührungslosen Lagerung der Welle 4 geeigneten Magnetfeldes angeordnet sind. Radial um den Stator 7 herum erstreckt sich eine Kühleinheit 8, die mittels eines kryogenen Mediums gekühlt wird. In dem hier gezeigten Ausführungsbeispiel, bei dem die Spulen des Stators 7 aus einem hochtemperatursupraleitenden Material bestehen, handelt es bei dem kryogenen Medium insbesondere um flüssigen Stickstoff; bestehen die Spulen dagegen aus einem konventionellen Supraleiter, kommt als kryogenes Medium bevorzugt flüssiges Helium zum Einsatz. Die Kühleinheit 8 umfasst ein Reservoir 9 für das kryogene Medium, das sich mit den supraleitenden Spulen des Stators 7 in Wärmekontakt befindet. Der Begriff "Reservoir" ist hier sehr umfassend zu verstehen und kann insbesondere einen mit Kühlmedium befüllten Behälter oder eine Kühlmedium führende Leitung beinhalten. Zum Zuführen von flüssigem kryogenen Medium dient eine mit dem Reservoir 9 strömungsverbundene Kühlmediumszuleitung 11; zum Abführen von verdampftem gasförmigem Medium dient eine im bestimmungsgemäßen Betrieb des Schwungrad-Energiespeichers 1 mit einer Gasphase im Reservoir 9 strömungsverbundene Gasableitung 12. Weiterhin umfasst der Schwungrad-Energiespeicher 1 einen Motor/Generator 13 mit ortsfestem Stator 14 und an der Welle 4 angeordnetem Rotor 15, der zur Ein- bzw. Auskopplung von Energie in den bzw. aus dem Schwungrad-Energiespeicher 1 dient. Unterhalb des Motors/Generators 13 ist ein Magnetlager 17 mit an der Welle 4 angeordnetem Rotor 18 und mit diesem wechselwirkendem Stator 18 angeordnet. Dieses Magnetlager 17, bei dem es sich bevorzugt um ein konventionelles aktives Magnetlager handelt, dient lediglich der Führung sowie als Notlager, falls das supraleitende Lager 5 in Folge einer Störung ausfallen sollte.

Um innerhalb des Vakuumbehälters 2 ein zum Dauerbetrieb des Schwungmassen-Energiespeichers 1 hinreichendes Vakuum herzustellen und aufrecht zu erhalten, wird der Vakuumbehälter 2 zunächst mittels einer hier nicht gezeigten Vakuumpumpe auf einen Druck von beispielsweise 10⁻³ mbar evakuiert. Zur weiteren Verbesserung des Vakuums dient ein Adsorber 20, der innerhalb einer mit dem Vakuumbehälter 2 verbundenen, thermisch gut isolierten Vakuumkammer 21 angeordnet ist. Der Adsorber 20 umfasst einen Körper mit einer möglichst großen, äußeren oder inneren Oberfläche. Moleküle, die von innerhalb des Vakuumbehälters 2 angeordneten Teilen der Apparatur ausgasen oder die von außen in den Vakuumbehälter 2 eindringen, werden vom Adsorber 20 aufgefangen und für die Dauer des Einsatzes des Schwungrad-Energiespeichers 1 gebunden. Auf diese Weise kann das Vakuum im Vakuumbehälter 2 noch deutlich verbessert werden, auf einen Wert von beispielsweise 10⁻⁴ bis 10⁻⁵ mbar und darunter. Der Adsorptionseffekt wird durch Kühlung noch verbessert. Aus diesem Grunde ist der Adsorber 20 über einen Wärmetauscher 22 mit der Gasableitung 12 wärmeverbunden. Die Kühlung macht dabei von dem Umstand Gebrauch, dass auch nach Erreichen einer Temperatur unterhalb der Sprungtemperatur des jeweils im Stator 7 eingesetzten supraleitenden Materials durch Strahlung und Wärmeleitung ein fortwährender, wenn auch geringfügiger Eintrag von Wärme in das supraleitende Lager 5 hinein erfolgt, der zum Verdampfen eines Teils des im Reservoirs 9 vorliegenden Kühlmediums führt. Der Kälteinhalt des verdampfenden und über die Gasableitung 12 abgeführten kryogenen Kühlmediums wird zumindest teilweise im Wärmetauscher 22 zur Kühlung des Adsorbers 20 genutzt. Die Kühlung des Adsorbers 20 kommt daher ohne ein eigenes Kühlsystem aus.

Vakuumkammer 21 und Vakuumbehälter 2 sind über eine Verbindungsleitung 23 miteinander strömungsverbunden, die bei Bedarf mittels einer hier nicht gezeigten Einrichtung unter Aufrechterhaltung des Vakuums im Vakuumbehälter 2 gesperrt werden kann. Anschließend wird die Vakuumkammer 21 über eine hier nicht gezeigte Schleuse geöffnet, und der Adsorber 20 kann entnommen werden. Auf diese Weise ist es möglich, den Adsorber 20 während des laufenden Betriebs des Schwungmassen-Energiespeichers 1 auszutauschen, wenn dies auf Gründen der Regeneration des betreffenden Adsorbers erforderlich sein sollte.

Im Übrigen kann der Adsorber 20 auch innerhalb des Vakuumbehälters 2 angeordnet sein, eine separate Vakuumkammer erübrigt sich dann. Allerdings muss in diesem Fall der Vakuumbehälter 2 belüftet werden, um den Adsorber 20 austauschen zu können.

### Bezugszeichenliste

1. Schwungrad-Energiespeicher
2. Vakuumbehälter
3. Schwungmasse
4. Welle
5. Supraleitendes Lager
6. Rotoreinheit
7. Stator
8. Kühleinheit
9. Reservoir
10. -
11. Kühlmediumszuleitung
12. Gasableitung
13. Motor/Generator
14. Stator
15. Rotor
16. -
17. Magnetlager
18. Rotor
19. Stator
20. Adsorber
21. Vakuumkammer
22. Wärmetauscher
23. Verbindungsleitung

## Patentansprüche

1. Maschine, umfassend einen an wenigstens einem supraleitenden Lager (5) berührungslos gelagerten Rotor, der in einem Vakuumbehälter (2) angeordnet ist, wobei das supraleitende Lager (5) zur Aufrechterhaltung seines Betriebszustandes mit einer von einem kryogenen Medium gekühlten Kältequelle (8) thermisch verbunden ist, und bei der Mittel zum Verbessern des im Vakuumbehälter (2) vorliegenden Vakuums vorgesehen sind,
**dadurch gekennzeichnet,**
**dass** als Mittel zum Verbessern des Vakuums ein mit einer Kühleinrichtung thermisch verbundener Adsorber (20) vorgesehen ist und
die Kühleinrichtung einen mit dem Adsorber (20) thermisch verbundenen Wärmetauscher (22) umfasst, der mit einer Abgasleitung (12) für verdampftes kryogenes Medium aus der Kältequelle (8) strömungsverbunden ist.

2. Maschine nach Anspruch 1, **dadurch gekennzeichnet, dass** der Adsorber (20) in einer mit dem Vakuumbehälter (2) strömungsverbundenen Vakuumkammer (21) angeordnet ist.

3. Maschine nach Anspruch 2, **dadurch gekennzeichnet, dass** die Strömungsverbindung zwischen der Vakuumkammer (21) und dem Vakuumbehälter (2) verschließbar ist.

4. Maschine nach einem der vorhergehenden Ansprüche, **dadurch gekennzeichnet, dass** als tiefkalt verflüssigtes Gas in der Kältequelle (8) flüssiger Stickstoff oder ein flüssiges Edelgas zum Einsatz kommt.

5. Maschine nach einem der vorhergehenden Ansprüche, **dadurch gekennzeichnet, dass** der Rotor eine Welle (4) und eine daran montierte Schwungmasse (3) aufweist.

## Claims

1. Machine, comprising a rotor, which is contactlessly mounted on at least one superconducting bearing (5) and is arranged in a vacuum container (2), wherein the superconducting bearing (5), in order to maintain its operating state, is thermally connected to a cold source (8) cooled by a cryogenic medium, and in which there are provided means for improving the vacuum in the vacuum container (2),
**characterized in that**
an adsorber (20) that is thermally connected to a cooling device is provided as the means for improving the vacuum,
and
the cooling device comprises a heat exchanger (22) which is thermally connected to the adsorber (20) and which is fluidically connected to a discharge gas line (12) for evaporated cryogenic medium from the cold source (8).

2. Machine according to Claim 1, **characterized in that** the adsorber (20) is arranged in a vacuum chamber (21} that is fluidically connected to the vacuum container (2) .

3. Machine according to Claim 2, **characterized in that** the fluidic connection between the vacuum chamber (21) and the vacuum container (2) can be closed.

4. Machine according to one of the preceding claims, **characterized in that** liquid nitrogen or a liquefied noble gas is used as the cryogenic liquefied gas in the cold source (8).

5. Machine according to one of the preceding claims, **characterized in that** the rotor has a shaft (4) and a flywheel mass (3) mounted thereon.

## Revendications

1. Machine comprenant un rotor monté sans contact sur au moins un palier supraconducteur (5), lequel rotor est disposé dans un récipient sous vide (2), le palier supraconducteur (5) étant relié thermiquement à une source froide (8) refroidie par un milieu cryogénique pour maintenir son état de fonctionnement, et des moyens étant prévus pour améliorer le vide présent dans le récipient sous vide (2),
**caractérisée en ce qu'**un adsorbeur (20) relié thermiquement à un dispositif de refroidissement est prévu comme moyen pour améliorer le vide et **en ce que** le dispositif de refroidissement comprend un échangeur de chaleur (22) qui est relié thermiquement à l'adsorbeur (20) et qui est relié fluidiquement à une conduite de gaz d'échappement (12) destinée au milieu cryogénique évaporé de la source froide (8).

2. Machine selon la revendication 1, **caractérisée en ce que** l'adsorbeur (20) est disposé dans une chambre à vide (21) qui est reliée fluidiquement au récipient à vide (2).

3. Machine selon la revendication 2, **caractérisée en ce que** la liaison fluidique entre la chambre à vide (21) et le récipient à vide (2) peut être fermée.

4. Machine selon l'une des revendications précédentes, **caractérisée en ce que** de l'azote liquide ou un gaz rare liquide est utilisé comme gaz liquéfié cryogénique dans la source froide (8).

5. Machine selon l'une des revendications précédentes, **caractérisée en ce que** le rotor comporte un arbre (4) et un volant (3) monté sur celui-ci.
